Europäisches Patentamt

European Patent Office

Office européen des brevets

(19)

(11) **EP 1 230 310 B1**

(12) **EUROPÄISCHE PATENTSCHRIFT**

(45) Veröffentlichungstag und Bekanntmachung des Hinweises auf die Patenterteilung:
**24.09.2003 Patentblatt 2003/39**

(21) Anmeldenummer: **00975939.0**

(22) Anmeldetag: **27.10.2000**

(51) Int Cl.⁷: **C09C 1/00**, C09C 3/06

(86) Internationale Anmeldenummer:
**PCT/EP00/10591**

(87) Internationale Veröffentlichungsnummer:
**WO 01/030921 (03.05.2001 Gazette 2001/18)**

(54) **FARBSTARKE INTERFERENZPIGMENTE**

INTERFERENCE PIGMENTS WITH GREAT COLOR STRENGTH

PIGMENTS INTERFERENTIELS A POUVOIR COLORANT ELEVE

(84) Benannte Vertragsstaaten:
**AT BE CH CY DE DK ES FI FR GB GR IE IT LI LU MC NL PT SE**

(30) Priorität: **28.10.1999 DE 19951871**

(43) Veröffentlichungstag der Anmeldung:
**14.08.2002 Patentblatt 2002/33**

(73) Patentinhaber: **MERCK PATENT GmbH**
**64293 Darmstadt (DE)**

(72) Erfinder:
• **SCHMIDT, Christoph**
**65830 Kriftel (DE)**
• **BERNHARDT, Klaus**
**64823 Gross-Umstadt (DE)**
• **SCHOEN, Sabine**
**64287 Darmstadt (DE)**
• **HEINZ, Dieter**
**64646 Heppenheim (DE)**

(56) Entgegenhaltungen:
EP-A- 0 211 351      EP-A- 0 753 545
WO-A-00/43456      WO-A-93/12182
WO-A-94/13489      WO-A-97/43348

**Beschreibung**

Die vorliegende Erfindung betrifft farbstarke Interferenzpigmente auf der Basis von mehrfach beschichteten plättchenförmigen Substraten.

Glanz- oder Effektpigmente werden in vielen Bereichen der Technik eingesetzt, insbesondere im Bereich der Autolacke, der dekorativen Beschichtung, im Kunststoff, in Farben, Druckfarben sowie in kosmetischen Formulierungen.

Glanzpigmente, die einen winkelabhängigen Farbwechsel zwischen mehreren Interferenzfarben zeigen, sind aufgrund ihres Farbenspiels von besonderem Interesse für Autolacke sowie bei fälschungssicheren Wertschriften. Derartige Pigmente auf Basis von mehrfach beschichteten plättchenförmigen Substraten sind aus der U.S. 4,434,010, JP H7-759, U.S. 3,438,796, U.S. 5,135,812, DE 44 05 494, DE 44 37 753, DE 195 16 181 und DE 195 15 988 bekannt.

Glanzpigmente auf Basis transparenter plättchenförmiger Substrate, die keinen "harten" metallischen Glanz aufweisen, sind Gegenstand der WO 93/12182. Glimmerplättchen werden mit einer hochbrechenden Metalloxidschicht, wie z.B. $TiO_2$, und einer nicht selektiv absorbierenden Schicht belegt. Diese Pigmente zeigen in Abhängigkeit von der $TiO_2$-Schichtdicke in der Aufsicht eine bestimmte Interferenzfarbe, die mit schräger werdendem Blickwinkel zunehmend schwächer wird und schließlich nach grau bzw. schwarz abkippt. Die Interferenzfarbe ändert sich nicht, aber es ist eine Abnahme der Farbsättigung festzustellen.

In der JP 1992/93206 werden Glanzpigmente auf Basis von Glasplättchen bzw. Glimmerpartikeln beansprucht, die mit einer opaken Metallschicht und alternierenden $SiO_2$- und $TiO_2$-Schichten belegt sind.

Aus der EP 0 753 545 A2 sind goniochromatische Glanzpigmente auf Basis von mehrfach beschichteten, hochbrechenden, für sichtbares Licht zumindest teilweise durchlässigen, nichtmetallischen, plättchenförmigen Substraten bekannt, die mindestens ein Schichtpaket aus einer farblosen niedrigbrechenden und einer reflektierenden, selektiv oder nicht selektiv absorbierenden, Beschichtung aufweisen. Bei dem in der EP 0 753 545 A2 beschriebenen Herstellungsverfahren handelt es sich um eine Beschichtung des Pigmentsubstrats über ein CVD-Verfahren in einem Wirbelbettreaktor. Dabei wird das Substrat, z. B. feinteiliger Glimmer, in einem Strom eines inerten Trägergases aufgewirbelt und in Bewegung gehalten. Die zur Bildung der Oxidschichten erforderlichen Reagenzien werden über den Inertgasstrom bzw. weitere Inertgaseinlässe zugeführt. Aufgrund des hohen Dichteunterschiedes zwischen dem Glimmer/Pigment und dem Trägergas ist jedoch ein wesentliches Problem dieses Verfahrens eine gleichmäßige Verteilung der Feststoffteilchen und damit eine gleichmäßige Beschichtung. Nachteile dieser Erfindung sind demzufolge der technisch sehr aufwendige und kostenintensive Herstellungsprozeß sowie die oft schwere Reproduzierbarkeit der Pigmente in der gewünschten Produktqualität.

Goniochromatische Glanzpigmente mit einer siliziumhaltigen Beschichtung auf Basis von mehrfach beschichteten plättchenförmigen metallischen Substraten sind aus der EP 0 768 343 A2 bekannt.

Den aus dem Stand der Technik bekannten Mehrschichtpigmenten ist gemeinsam, daß sie eine zu geringe Farbstärke, und ein vergleichsweise niedriges Deckvermögen besitzen. Weiterhin sind die Pigmente zum Teil sehr schwer herstellbar bzw. reproduzierbar.

Aufgabe der vorliegenden Erfindung ist es deckende Gold- und Orangerote-Interferenzpigmente mit einer hohen Farbstärke zur Verfügung zu stellen, die sich durch ihre vorteilhaften Anwendungseigenschaften auszeichnen und gleichzeitig auf einfache Art und Weise hergestellt werden können.

Überraschenderweise wurden nun Gold- und Orangerotpigmente auf Basis von mehrfach beschichteten plättchenförmigen Substraten gefunden, die eine bestimmte Anordnung optisch funktioneller Schichten enthalten, wodurch besondere optische Effekte erzielt werden.

Die erfindungsgemäßen farbstarken Interferenzpigmente zeichnen sich durch ihre außerordentlich hohe Buntheit C ("Farbstärke"), ihr sehr hohes Deckvermögen und einen sehr starken Glanz mit Glitzereffekt aus. Im Gegensatz zu goldfarbenen Perlglanzpigmenten, wie sie beispielsweise aus der EP 0 211 351 B1 bekannt sind, zeigen die erfindungsgemäßen goldfarbenen Interferenzpigmente eine deutlich höhere Farbstärke und ein höheres Deckvermögen. Die erfindungsgemäßen Goldpigmente sind insbesondere im Tiefdruck auf Textilien eine gleichwertige - und in Bezug auf Glanz und Farbstärke - überlegene Alternative zu den bekannten Metallbronzen.

Im Gegensatz zu den goniochromatischen Pigmenten aus dem Stand der Technik weisen die erfindungsgemäßen Pigmente keinen bzw. nur einen geringfügig winkelabhängigen Farbeffekt auf.

Gegenstand der Erfindung sind somit farbstarke Interferenzpigmente auf der Basis von mehrfach beschichteten plättchenförmigen Substraten, die mindestens eine Schichtenfolge aus

(A) einer hochbrechenden Beschichtung bestehend aus einem Gemisch aus $TiO_2$ und $Fe_2O_3$ im Verhältnis 1:0,1 bis 1:5, und optional ein oder mehreren Metalloxiden in Mengen von $\leq$ 20 Gew.% bezogen auf die Schicht (A),

(B) einer farblosen Beschichtung mit einem Brechungsindex n $\leq$ 1,8,

(C) einer farblosen Beschichtung mit einem Brechungsindex n > 1,8,

(D) einer absorbierenden Beschichtung mit einem Brechungsindex n > 1,8
und optional

(E) eine äußere Schutzschicht

enthalten.

Gegenstand der Erfindung ist weiterhin die Verwendung der erfindungsgemäßen Pigmente in Farben, Lacken, Druckfarben, Kunststoffen, keramischen Materialien, Gläsern und kosmetischen Formulierungen, insbesondere in Druckfarben. Weiterhin sind die erfindungsgemäßen Pigmente auch zur Herstellung von Pigmentpräparationen sowie zur Herstellung von Trockenpräparaten, wie z.B. Granulate, Chips, Pellets, Briketts, etc. geeignet. Die Trockenpräparate sind insbesondere für Druckfarben geeignet.

Geeignete Basissubstrate für die erfindungsgemäßen Mehrschichtpigmente sind einerseits opake und andererseits transparente plättchenförmige Substrate. Bevorzugte Substrate sind Schichtsilikate. Insbesondere geeignet sind natürlicher und/oder synthetischer Glimmer, Talkum, Kaolin, plättchenförmige Eisen- oder Aluminiumoxide, Glas-, $SiO_2$-, $TiO_2$-, Graphitplättchen, synthetische trägerfreie Plättchen, Liquid crystal polymers (LCPs), holographische Pigmente, BiOCl, Metallplättchen, wie z. B. Aluminiumplättchen, Plättchen aus Aluminiumbronzen, Messingbronzen, Zinkbronzen, Titanbronzen, oder anderen vergleichbaren Materialien.

Die Größe der Basissubstrate ist an sich nicht kritisch und kann auf den jeweiligen Anwendungszweck abgestimmt werden. In der Regel haben die plättchenförmigen Substrate eine Dicke zwischen 0,05 und 5 µm, insbesondere zwischen 0,1 und 4,5 µm. Die Ausdehnung in den beiden anderen Bereichen beträgt üblicherweise zwischen 1 und 250 µm, vorzugsweise zwischen 2 und 200 µm, und insbesondere zwischen 5 und 60 um.

Die Dicke der einzelnen Schichten mit hohem (z.B. Pseudobrookit) und niedrigem Brechungsindex auf dem Basissubstrat ist wesentlich für die optischen Eigenschaften des Pigments. Für ein Pigment mit intensiven Interferenzfarben muß die Dicke der einzelnen Schichten genau aufeinander eingestellt werden.

Wenn n der Brechungsindex einer dünnen Schicht und d ihre Dicke ist, wird die Interferenzfarbe dieser Schicht von dem Produkt n · d (n · d = optische Dicke) bestimmt. Die bei Normallichteinfall im reflektierten Licht entstehenden Farben eines solchen Films ergeben sich aus einer Verstärkung des Lichtes der Wellenlänge

$$\lambda = \frac{4}{2N\text{-}1} \cdot n \cdot d$$

und durch Schwächung des Lichtes der Wellenlänge,

$$\lambda = \frac{2}{N} \cdot n \cdot d$$

wobei N eine positive ganze Zahl ist.

Die bei zunehmender Filmdicke resultierende Variation der Farbe ergibt sich aus der Verstärkung bzw. Schwächung bestimmter Wellenlängen des Lichtes durch Interferenz. Wenn mehrere Schichten in einem Mehrschichtpigment die gleiche optische Dicke besitzen, wird die Farbe des reflektierten Lichts mit zunehmender Zahl der Schichten intensiver. Bei geeigneter Wahl der Schichtdicken können aber auch mit Schichten unterschiedlicher optischer Dicke sehr attraktive Interferenzpigmente erhalten werden. Die Dicke der einzelnen Metalloxidschichten unabhängig von ihrem Brechungsindex beträgt in Abhängigkeit vom Anwendungsgebiet in der Regel 5 bis 600 nm, vorzugsweise 10 bis 500 nm, und insbesondere 20 bis 400 nm.

Die erfindungsgemäßen Interferenzpigmente weisen alternierend eine hochbrechende Beschichtung (A) bestehend aus einem Gemisch aus $TiO_2$ und $FeO_3$, vorzugsweise Pseudobrookit, in Kombination mit einer farblosen niedrigbrechenden Beschichtung (B) auf. Die Schicht (C) besteht vorzugsweise aus $TiO_2$, $ZrO_2$, $SnO_2$, $Ce_2O_3$, BiOCl, bzw. Gemische oder Kombinationen davon. In dem Fall, daß die Schicht (C) $TiO_2$ enthält, liegt das $TiO_2$ vorzugsweise in der Rutilmodifikation vor. Für die Schicht (D) geeignete Materialien sind absorbierende Materialien wie Metalle, wie z. B. Eisen, Wolfram, Chrom, Kobalt, Nickel, Kupfer, Silber, Gold, Aluminium sowie deren Legierungen, Metalloxide, wie z.B. CoO, $Co_3O_4$, $Fe_2O_3$, $Fe_3O_4$, Pseudobrookit, $VO_2$, $V_2O_3$, Metallsulfide, wie z.B. Molybdänsulfid, Eisensulfid, Wolframsulfid, Chromsulfid, Kobaltsulfid, Nickelsulfid sowie Gemische dieser Sulfide. Bei der absorbierenden Schicht (D) handelt es sich vorzugsweise um eine Schicht aus Pseudobrookit oder $Fe_2O_3$ oder um ein Gemisch aus Pseudobrookit mit $TiO_2$ bzw. Pseudobrookit mit $Fe_2O_3$. Die Schicht (D) besitzt einen Brechungsindex von n > 1,8, insbesondere von n > 2,0.

Die Pigmente können mehrere, gleiche oder verschiedene Kombinationen an Schichtpaketen enthalten, bevorzugt ist aber die Belegung des Substrats mit nur einem Schichtpaket (A) + (B) + (C) + (D). Zur Intensivierung der Farbstärke kann das erfindungsgemäße Pigment bis zu 4 Schichtpaketen enthalten, wobei die Dicke aller Schichten auf dem Substrat 3 μm allerdings nicht überschreiten sollte. Vorzugsweise wird eine ungerade Anzahl von Schichten auf das plättchenförmige Substrat aufgebracht mit je einer hochbrechenden Schicht in innerster und äußerster Lage. Besonders bevorzugt ist ein Aufbau von vier optischen Interferenzschichten in der Reihenfolge (A) (B) (C) (D).

Zwischen der Schicht (C) und (D) kann sich eine weitere farblose niedrigbrechende Schicht (B*) befinden, die gleich oder verschieden mit der Schicht (B) sein kann.

Die hochbrechende Schicht (A) hat vorzugsweise einen Brechungsindex n ≥ 1,8, insbesondere von n ≥ 2,0 und ist ein Gemisch aus $TiO_2$ und $Fe_2O_3$, wobei das Mischungsverhältnis 1:0,1 bis 1:5, insbesondere 1:1 bis 1:2,5 beträgt. Vorzugsweise handelt es sich bei der Schicht (A) um den farbstarken Pseudobrookit. Die Dicke der Schicht (A) beträgt 10 bis 300 nm, vorzugsweise 15 bis 250 nm und insbesondere 20 bis 200 nm.

Häufig empfiehlt es sich zur Erhöhung der Farbstärke der Schicht (A) dem $TiO_2/Fe_2O_3$-Gemisch noch ein oder mehrere Metalloxide, wie z.B. $Al_2O_3$, $Ce_2O_3$, $B_2O_3$, $ZrO_2$, $SnO_2$, zuzumischen. Der Gew.%-Anteil der weiteren Metalloxide neben dem $Fe_2O_3/TiO_2$-Gemisch sollte in der Schicht (A) nicht mehr als 20 Gew.%, vorzugsweise nicht mehr als 10 Gew.%, betragen.

In dem Fall, daß es sich bei der Schicht (D) ebenfalls um eine Schicht aus einem $TiO_2/Fe_2O_3$-Gemisch handelt, empfiehlt sich ebenfalls die Zugabe von ein oder mehreren Metalloxiden, wie z.B. $Al_2O_3$, $Ce_2O_3$, $B_2O_3$, $ZrO_2$, $SnO_2$, zur Erhöhung der Farbstärke in Mengen von nicht mehr als 20 Gew.% bezogen auf die Schicht (D).

Als farblose niedrigbrechende für die Beschichtung (B) geeignete Materialien sind vorzugsweise Metalloxide bzw. die entsprechenden Oxidhydrate, wie z.B. $SiO_2$, $Al_2O_3$, $AlO(OH)$, $B_2O_3$, $MgF_2$, $MgSiO_3$ oder ein Gemisch der genannten Metalloxide, geeignet. Die Dicke der Schicht (B) beträgt 10 bis 600 nm, vorzugsweise 20 bis 500 nm und insbesondere 20 bis 400 nm.

Durch die Beschichtung der Substrate mit einer hochbrechenden Pseudobrookitschicht, einer niedrigbrechenden Schicht (B), einer hochbrechenden Schicht (C) und einer absorbierenden Schicht (D) entstehen Interferenzpigmente, deren Farbe, Glanz und Deckvermögen in weiten Grenzen variiert werden können.

Besonders bevorzugte Farbpigmente weisen folgende Schichtenfolgen auf:

Substrat + $TiFe_2O_5$ (A) + $SiO_2$ (B) + $TiO_2$ (C) + $Fe_2O_3/TiO_2$ (D)
Substrat + $TiFe_2O_5$ (A) + $SiO_2$ (B) + $TiO_2$ (C) + $Fe_2O_3$ (D)
Substrat + $TiFe_2O_5$ (A) + $SiO_2$ (B) + $TiO_2$ (C) + $TiFe_2O_5$ (D)
Substrat + $TiFe_2O_5$ (A) + $SiO_2$ (B) + $TiO_2$ (C) + $SiO_2$ (B*) + $TiFe_2O_5$ (D)
Substrat + $TiFe_2O_5$ (A) + $SiO_2$ (B) + $TiO_2$ (C) + $SiO_2$ (B*) + $Fe_2O_3/TiO_2$ (D)

Die erfindungsgemäßen Pigmente lassen sich leicht herstellen durch die Erzeugung mehrerer hoch- und niedrigbrechender Interferenzschichten mit genau definierter Dicke und glatter Oberfläche auf den feinteiligen, plättchenförmigen Substraten.

Die Metalloxidschichten werden vorzugsweise naßchemisch aufgebracht, wobei die zur Herstellung von Perlglanzpigmenten entwickelten naßchemischen Beschichtungsverfahren angewendet werden können. Derartige Verfahren sind z.B. beschrieben in DE 14 67 468, DE 19 59 988,
DE 20 09 566, DE 22 14 545, DE 22 15 191, DE 22 44 298,
DE 23 13 331, DE 25 22 572, DE 31 37 808, DE 31 37 809,
DE 31 51 343, DE 31 51 354, DE 31 51 355, DE 32 11 602,
DE 32 35 017 oder auch in weiteren dem Fachmann bekannten Patentdokumenten und sonstigen Publikationen.

Bei der Naßbeschichtung werden die Substratpartikel in Wasser suspendiert und mit einem oder mehreren hydrolysierbaren Metallsalzen bei einem für die Hydrolyse geeigneten pH-Wert versetzt, der so gewählt wird, daß die Metalloxide bzw. Metalloxidhydrate direkt auf den Plättchen ausgefällt werden, ohne daß es zu Nebenfällungen kommt. Der pH-Wert wird üblicherweise durch gleichzeitiges Zudosieren einer Base und/oder Säure konstant gehalten. Anschließend werden die Pigmente abgetrennt, gewaschen und getrocknet und gegebenenfalls geglüht, wobei die Glühtemperatur im Hinblick auf die jeweils vorliegende Beschichtung optimiert werden kann. In der Regel liegen die Glühtemperaturen zwischen 250 und 1000 °C, vorzugsweise zwischen 350 und 900 °C. Falls gewünscht können die Pigmente nach Aufbringen einzelner Beschichtungen abgetrennt, getrocknet und ggf. geglüht werden, um dann zur Auffällung der weiteren Schichten wieder resuspendiert zu werden.

Weiterhin kann die Beschichtung auch in einem Wirbelbettreaktor durch Gasphasenbeschichtung erfolgen, wobei z.B. die in EP 0 045 851 und EP 0 106 235 zur Herstellung von Perlglanzpigmenten vorgeschlagenen Verfahren entsprechend angewendet werden können.

Der Farbton der Pigmente kann in weiten Grenzen durch unterschiedliche Wahl der Belegungsmengen bzw. der daraus resultierenden Schichtdicken variiert werden. Die Feinabstimmung für einen bestimmten Farbton kann über die reine Mengenwahl hinaus durch visuell oder meßtechnisch kontrolliertes Anfahren der gewünschten Farbe erreicht werden.

Zur Erhöhung der Licht-, Wasser- und Wetterstabilität empfiehlt es sich häufig, in Abhängigkeit vom Einsatzgebiet, das fertige Pigment einer Nachbeschichtung oder Nachbehandlung zu unterziehen. Als Nachbeschichtungen bzw. Nachbehandlungen kommen beispielsweise die in den DE-PS 22 15 191, DE-OS 31 51 354, DE-OS 32 35 017 oder DE-OS 33 34 598 beschriebenen Verfahren in Frage. Durch diese Nachbeschichtung (Schicht E) wird die chemische Stabilität weiter erhöht oder die Handhabung des Pigments, insbesondere die Einarbeitung in unterschiedliche Medien, erleichtert.

Die erfindungsgemäßen Pigmente sind mit einer Vielzahl von Farbsystemen kompatibel vorzugsweise aus dem Bereich der Lacke, Farben und Druckfarben. Für die Herstellung der Druckfarben ist eine Vielzahl von Bindern, insbesondere wasserlösliche Typen, geeignet, wie sie z.B. von den Firmen BASF, Marabu, Pröll, Sericol, Hartmann, Gebr. Schmidt, Sicpa, Aarberg, Siegberg, GSB-Wahl, Follmann, Ruco oder Coates Screen INKS GmbH vertrieben werden. Die Druckfarben können auf Wasserbasis oder Lösemittelbasis aufgebaut sein. Weiterhin sind die Pigmente auch für die Lasermarkierung von Papier und Kunststoffen, sowie für Anwendungen im Agrarbereich, z.B. für Gewächshausfolien, sowie z. B. für die Farbgebung von Zeltplanen, geeignet.

Gegenstand der Erfindung ist somit auch die Verwendung der Pigmente in Formulierungen wie Farben, Druckfarben, Sicherheitsdruckfarben, Lacken, Kunststoffen, keramischen Materialien, Gläsern und in kosmetischen Formulierungen.

Es versteht sich von selbst, daß für die verschiedenen Anwendungszwecke die Mehrschichtpigmente auch vorteilhaft in Abmischung mit organischen Farbstoffen, organischen Pigmenten oder anderen Pigmenten, wie z. B. transparenten und deckenden Weiß-, Bunt- und Schwarzpigmenten sowie mit plättchenförmigen Eisenoxiden, organischen Pigmenten, holographischen Pigmenten, LCPs (Liquid Crystal Polymers), und herkömmlichen transparenten, bunten und schwarzen Glanzpigmenten auf der Basis von metalloxidbeschichteten Glimmer- und $SiO_2$-Plättchen, etc., verwendet werden können. Die Mehrschichtpigmente können in jedem Verhältnis mit handelsüblichen Pigmenten und Füllern gemischt werden.

Die erfindungsgemäßen Pigmente sind weiterhin geeignet zur Herstellung von fließfähigen Pigmentpräparationen und Trockenpräparaten, insbesondere für Druckfarben, enthaltend ein oder mehrere erfindungsgemäße Pigmente, Bindemittel und optional ein oder mehrere Additiven.

Die nachfolgenden Beispiele sollen die Erfindung näher erläutern ohne sie jedoch zu beschränken.

Beispiele

Beispiel 1

100 g Glimmer der Teilchengröße 10-60 μm werden in 2 i entmineralisiertem Wasser auf 75 °C aufgeheizt. Nach Erreichen dieser Temperatur wird unter starkem Rühren eine Lösung von 130,5 g $FeCl_3$ x 6 $H_2O$, 46,5 g $TiCl_4$ und 11,6 g $AlCl_3$ x 6 $H_2O$ in 84,3 g entmineralisiertem Wasser langsam zudosiert. Der pH-Wert wird mit 32%-iger Natronlauge konstant bei pH 2,6 gehalten. Nach Zugabe dieser Lösung wird ca. 15 Minuten nachgerührt. Anschließend wird der pH-Wert mit 32%-iger Natronlauge auf pH = 7,5 angehoben und bei diesem pH-Wert werden 431 g Natronwasserglaslösung (13,5 % $SiO_2$) langsam zudosiert. Danach wird der pH-Wert mit 10%-iger Salzsäure auf 2,0 abgesenkt, 15 Minuten nachgerührt und 393 g $TiCl_4$-Lösung (370 g $TiCl_4$/l) zudosiert. Dabei wird der pH-Wert mit 32%-iger Natronlauge konstant gehalten. Anschließend wird der pH-Wert mit 32%-iger Natronlauge auf 2,6 erhöht und eine Lösung bestehend aus 34 g $FeCl_3$ x 6 $H_2O$ und 49 g entmineralisiertem Wasser langsam zudosiert. Der pH-Wert wird mit 32%-iger Natronlauge konstant bei pH = 2,6 gehalten. Nach Zugabe dieser Lösung wird ca. 15 Minuten nachgerührt. Anschließend wird der pH-Wert mit 32%-iger Natronlauge auf pH = 5,0 angehoben und weitere 15 Minuten nachgerührt.

Das Pigment wird abfiltriert, mit entmineralisiertem Wasser gewaschen und 16 h bei 110 °C getrocknet. Zuletzt wird das Pigment 30 Minuten bei 850 °C geglüht. Man erhält ein Goldpigment mit intensiver Farbe, hohem Deckvermögen und starkem Glanz.

Beispiel 2

100 g Glimmer der Teilchengröße 10-60 μm werden in 2 l entmineralisiertem Wasser auf 75 °C aufgeheizt. Nach Erreichen dieser Temperatur wird unter starkem Rühren eine Lösung von 121,5 g $FeCl_3$ x 6 $H_2O$, 43,3 g $TiCl_4$ und 10,6 g $AlCl_3$ x 6 $H_2O$ in 77,0 g entmineralisiertem Wasser langsam zudosiert. Der pH-Wert wird mit 32%-iger Natronlauge konstant auf 2,6 gehalten. Nach Zugabe dieser Lösung wird ca. 15 Minuten nachgerührt. Anschließend wird der pH-Wert mit 32%-iger Natronlauge auf pH 7,5 angehoben und bei diesem pH-Wert werden 394 g Natronwasserglaslösung (13,5 % $SiO_2$) langsam zudosiert. Danach wird der pH-Wert mit 10%-iger Salzsäure auf 2,0 abgesenkt. Es wird 15 Minuten nachgerührt und danach eine Lösung von 314 g $TiCl_4$-Lösung (370 g $TiCl_4$/l) zudosiert. Der pH-Wert wird dabei mit 32%-iger Natronlauge konstant gehalten. Anschließend wird der pH-Wert mit 32%-iger Natronlauge auf 2,6 erhöht und eine Lösung von ca. 48,6 g $FeCl_3$ x 6 $H_2O$, 18,6 g $TiCl_4$ und 4,0 g $AlCl_3$ x 6 $H_2O$ in 31,4 g entmineralisiertem Wasser langsam zudosiert. Der pH-Wert wird mit 32%-iger Natronlauge konstant bei 2,6 gehalten. Nach Zugabe dieser Lösung wird ca. 15 Minuten nachgerührt. Anschließend wird der pH-Wert mit 32%-iger Natronlauge auf pH 5,0 angehoben und weitere 15 Minuten nachgerührt. Das Pigment wird abfiltriert, mit 15 l entmineralisiertem Wasser gewaschen und 16 h bei 110 °C getrocknet.

Das Pigment wird abschließend 30 Minuten bei 850 °C geglüht. Man erhält ein Goldpigment mit intensiver Farbe, hohem Deckvermögen und starkem Glanz.

Beispiel 3

100 g Glimmer der Teilchengröße 10-60 µm werden in 2 l entmineralisiertem Wasser auf 75 °C aufgeheizt. Nach Erreichen dieser Temperatur wird unter starkem Rühren eine Lösung von 121,5 g $FeCl_3$ x 6 $H_2O$, 43,3 g $TiCl_4$ und 10,6 g $AlCl_3$ x 6 $H_2O$ in 77,0 g entmineralisiertem Wasser langsam eindosiert. Der pH-Wert wird mit 32%-iger Natronlauge konstant bei pH = 2,6 gehalten. Nach Zugabe dieser Lösung wird ca. 15 Minuten nachgerührt. Anschließend wird der pH-Wert mit 32%-iger Natronlauge auf pH = 7,5 angehoben und bei diesem pH-Wert werden 394 g Natronwasserglaslösung (13,5 % $SiO_2$) langsam zudosiert. Danach wird der pH-Wert mit 10%-iger Salzsäure auf 2,0 abgesenkt, 15 Minuten nachgerührt und eine Lösung von 235 g $TiCl_4$-Lösung (370 g $TiCl_4$/l) langsam zudosiert. Dabei wird der pH-Wert mit 32%-iger Natronlauge konstant gehalten. Anschließend werden bei pH=2,0 22 g Natronwasser-glaslösung (13,5 % $SiO_2$) langsam zudosiert und es wird 15 Minuten nachgerührt. Danach wird der pH-Wert mit 32%-iger Natronlauge auf 2,6 erhöht, weitere 15 Minuten nachgerührt und 65,3 g $FeCl_3$ x 6 $H_2O$, 23,3 g $TiCl_4$ und 5,8 g $AlCl_3$ x 6 $H_2O$ in 42,1 g entmineralisiertem Wasser langsam zudosiert. Der pH-Wert wird mit 32%-iger Natronlauge konstant bei 2,6 gehalten. Nach Zugabe dieser Lösung wird ca. 15 Minuten nachgerührt. Anschließend wird der pH-Wert mit 32%-iger Natronlauge auf pH 5,0 angehoben und weitere 15 Minuten nachgerührt. Das Pigment wird abfiltriert, mit entmineralisiertem Wasser gewaschen und 16 h bei 110 °C getrocknet.

Das Pigment wird abschließend 30 Minuten bei 850° C geglüht. Man erhält ein Goldpigment mit intensiver Farbe, hohem Deckvermögen und starkem Glanz.

Die nachfolgende Tabelle zeigt die koloristischen Daten der erfindungsgemäßen Pigmente im Vergleich zu einem Perlglanzgoldpigment und einem Goldbronzepigment, die dem Stand der Technik entsprechen. (Phyma-Lab-Werte, gemessen auf schwarzem Untergrund im Glanz 22,5°/22,5°):

| | L | a | b | h | C | Deckvermögen |
|---|---|---|---|---|---|---|
| goldfarbenes Perlglanzpigment Iriodin® 306 ($TiO_2$/ $Fe_2O_3$-Glimmerpigment der Teilchengröße 10-60 µm der Fa. Merck KGaA) | 66,0 | 1,5 | 20,6 | 85,7 | 20,7 | 32,4 |
| Gold-Interferenzpigment Beisp. 1 | 77,7 | 1,4 | 32,2 | 87,5 | 32,2 | 52,5 |
| Gold-Interferenzpigment Beisp. 2 | 80 | -0,9 | 34,0 | 91,5 | 34,0 | 62,7 |
| Gold-Interferenzpigment Beisp. 3 | 75,0 | -1,2 | 28,3 | 92,5 | 28,3 | 47,8 |
| Metallgoldbronze (Fa. Eckart, Reichbleichgold), Vergleichspigment | 67,1 | 1,5 | 15,4 | 84,8 | 15,5 | 51,5 |

Die koloristischen Daten zeigen insbesondere im b-Wert und der Buntheit C eindeutig die Vorteile gegenüber den Vergleichspigmenten.

Anwendungsbeispiele

Beispiel A: Flexodruck

Bindemittel:	Koustom Kote 9000/USA, wasserbasiert
		Verdünner: Wasser

Farbherstellung:

a) Pigment aus Beispiel 2 (22,9 %) prewetting Byk 348 (0,6 %) Viskosität: 40 sec, 4mm-Erichsen-Becher, RT
b) Iriodin® 306 (22,1 %), prewetting Byk 348 (0,6%) Viskosität 41 sec., 4mm-Erichsen-Becher, RT

Die Pigmente werden von einem Anilox-Keramik-Zylinder (24 ccm/m$^2$) über ein Lackplattenklischee auf matt-schwarzes Kunstdruckpapier (Offset) gedruckt. Das erfindungsgemäße Pigment aus Beispiel 2 zeigte einen deutlich stärkeren Farb- und Glanzeffekt als das Vergleichspigment (Iriodin® 306). Die koloristischen Meßwerte der bedruckten Oberfläche bestätigen dieses Ergebnis:

|  | L | a | b |
|---|---|---|---|
| Iriodin® 306 | 35,4 | 0,1 | 5,7 |
| Pigment aus Beispiel 2 | 50,9 | -0,8 | 13,6 |
| Differenz (%) | +14 | n.r. | +138 |

Beispiel B: Lackapplikation

Herstellung der Lackbleche:

Lack: Herberts Basislack 419982
Pigmentierung : 5 %
Trockenschichtdicke: 15 μm
Spritzpistole: Sprimag S 233, Düsendurchmesser: 1,5 mm
Spritzdruck: 4 bar
Abstand Düse-Substrat: 27 cm
Die Sprühlackierung von Aluminiumprüfblechen mit Pigment aus Beispiel 2 sowie dem Vergleichspigment Iriodin 306® ergibt folgende koloristische Werte:

|  | weißer Untergrund | | |
|---|---|---|---|
|  | L | a | b |
| Iriodin® 306 | 72,7 | 9,0 | 51,3 |
| Pigment aus Beispiel 2 | 79,9 | 2,4 | 57,6 |

|  | schwarzer Untergrund | | | |
|---|---|---|---|---|
|  | L | a | b | C |
| Iriodin® 306 | 68,3 | 4,2 | 44,4 | 44,6 |
| Pigment aus Beispiel 2 (Messung: Minolta CR 300) | 78,3 | 0,3 | 54,1 | 54,1 |

Das Pigment aus Beispiel 2 zeigt eine wesentlich größere Helligkeit L und Buntheit C als das Vergleichspigment.

**Patentansprüche**

1. Farbstarke Interferenzpigmente auf der Basis von mehrfach beschichteten plättchenförmigen Substraten, die mindestens eine Schichtenfolge aus

(A) einer hochbrechenden Beschichtung bestehend aus einem Gemisch aus $TiO_2$ und $Fe_2O_3$ im Verhältnis 1: 0,1 bis 1:5 und optional ein oder mehreren Metalloxiden in Mengen von ≤ 20 Gew.% bezogen auf die Schicht (A),

(B) einer farblosen Beschichtung mit einem Brechungsindex n ≤ 1,8,

(C) einer farblosen Beschichtung mit einem Brechungsindex n > 1,8

(D) einer absorbierenden Beschichtung mit einem Brechungsindex n > 1,8
und optional

(E) eine äußere Schutzschicht

enthalten.

2. Interferenzpigmente nach Anspruch 1, **dadurch gekennzeichnet, daß** es sich bei den plättchenförmigen Substraten um natürlichen oder synthetischen Glimmer, Glas-, $Al_2O_3$-, $SiO_2$- oder $TiO_2$-Plättchen handelt.

3. Interferenzpigmente nach Anspruch 1 oder 2, **dadurch gekennzeichnet, daß** die Schicht (A) aus Pseudobrookit besteht.

4. Interferenzpigmente nach einem der Ansprüche 1 bis 3, **dadurch gekennzeichnet, daß** die Schicht (B) im wesentlichen aus ein oder mehreren Metalloxiden besteht.

5. Interferenzpigmente nach einem der Ansprüche 1 bis 4, **dadurch gekennzeichnet, daß** die Schicht (B) im wesentlichen aus Siliziumdioxid, Aluminiumoxid, Magnesiumfluorid oder deren Gemischen besteht.

6. Interferenzpigmente nach einem der Ansprüche 1 bis 5, **dadurch gekennzeichnet, daß** die Schicht (A) als weiteres Metalloxid $Al_2O_3$, $Ce_2O_3$ und/oder $B_2O_3$ enthält.

7. Interferenzpigmente nach einem der Ansprüche 1 bis 6, **dadurch gekennzeichnet, daß** sie bis zu viermal die Schichtenfolge (A) + (B) + (C) + (D) aufweisen.

8. Interferenzpigmente nach einem der Ansprüche 1 bis 6, **dadurch gekennzeichnet, daß** sie nur eine Schichtenfolge (A) + (B)+ (C) + (D) aufweisen.

9. Interferenzpigmente nach einem der Ansprüche 1 bis 8, **dadurch gekennzeichnet, daß** sie zwischen den Schichten (C) und (D) eine weitere farblose niedrigbrechende Schicht (B*) enthalten, die mit der Schicht (B) gleich oder verschieden sein kann.

10. Interferenzpigmente nach einem der Ansprüche 1 bis 9, **dadurch gekennzeichnet, daß** sie zu Erhöhung der Licht-, Temperatur- und Wetterstabilität eine äußere Schutzschicht (E) aufweisen.

11. Verfahren zur Herstellung der Interferenzpigmente nach einem der Ansprüche 1 bis 10, **dadurch gekennzeichnet, daß** die Beschichtung der Substrate naßchemisch durch hydrolytische Zersetzung von Metallsalzen in wäßrigem Medium erfolgt.

12. Verwendung der Interferenzpigmente nach Anspruch 1 in Farben, Lacken, Druckfarben, Sicherheitsdruckfarben, Kunststoffen, keramischen Materialien, Gläsern und in kosmetischen Formulierungen und zur Herstellung von Pigmentpräparationen und Trockenpräparaten.

13. Pigmentpräparationen enthaltend ein oder mehrere Bindemittel, optional ein oder mehrere Additive, und ein oder mehrere Interferenzpigmente gemäß Anspruch 1.

14. Trockenpräparationen wie Pellets, Granulate, Chips, Briketts enthaltend farbstarke Interferenzpigmente nach Anspruch 1.

**Claims**

1. Intensely coloured interference pigments based on multicoated platelet-shaped substrates which comprise at least one layer sequence comprising

(A) a high-refractive-index coating consisting of a mixture of $TiO_2$ and $Fe_2O_3$ in the ratio 1:0.1 to 1:5 and optionally one or more metal oxides in amounts of $\leq$ 20% by weight, based on layer (A),
(B) a colourless coating having a refractive index n $\leq$ 1.8,
(C) a colourless coating having a refractive index n > 1.8,
(D) an absorbent coating having a refractive index n > 1.8,
and optionally
(E) an outer protective layer.

2. Interference pigments according to Claim 1, **characterised in that** the platelet-shaped substrates are natural or synthetic mica or glass, $Al_2O_3$, $SiO_2$ or $TiO_2$ platelets.

3. Interference pigments according to Claim 1 or 2, **characterised in that** layer (A) consists of pseudobrookite.

4. Interference pigments according to one of Claims 1 to 3, **characterised in that** layer (B) essentially consists of one or more metal oxides.

5. Interference pigments according to one of Claims 1 to 4, **characterised in that** layer (B) essentially consists of silicon dioxide, aluminium oxide, magnesium fluoride or mixtures thereof.

6. Interference pigments according to one of Claims 1 to 5, **characterised in that** layer (A) comprises $Al_2O_3$, $Ce_2O_3$ and/or $B_2O_3$ as further metal oxide.

7. Interference pigments according to one of Claims 1 to 6, **characterised in that** they have the layer sequence (A) + (B) + (C) + (D) up to four times.

8. Interference pigments according to one of Claims 1 to 6, **characterised in that** they have only one layer sequence (A) + (B) + (C) + (D).

9. Interference pigments according to one of Claims 1 to 8, **characterised in that** they comprise, between layers (C) and (D), a further colourless low-refractive-index layer (B*), which may be identical to or different from layer (B).

10. Interference pigments according to one of Claims 1 to 9, **characterised in that** they have an outer protective layer (E) in order to increase the light, temperature and weather stability.

11. Process for the preparation of the interference pigments according to one of Claims 1 to 10, **characterised in that** the coating of the substrates is carried out wet-chemically by hydrolytic decomposition of metal salts in aqueous medium.

12. Use of the interference pigments according to Claim 1 in paints, coatings, printing inks, security printing inks, plastics, ceramic materials, glasses and in cosmetic formulations and for the preparation of pigment preparations and dry preparations.

13. Pigment preparations comprising one or more binders, optionally one or more additives, and one or more interference pigments according to Claim 1.

14. Dry preparations, such as pellets, granules, chips and briquettes, comprising intensely coloured interference pigments according to Claim 1.

**Revendications**

1. Pigments d'interférence à pouvoir colorant élevé à base de substrats de forme lamellaire présentant plusieurs revêtements, comportant au moins une suite de couches constituée

(A) d'un revêtement fortement réfringent formé d'un mélange de $TiO_2$ et de $Fe_2O_3$ dans un rapport compris entre 1:0,1 et 1:5 et, de façon optionnelle, d'un ou plusieurs oxydes métalliques en une quantité $\leq$ 20 % en poids rapporté à la couche (A),
(B) d'un revêtement incolore ayant un indice de réfraction n $\leq$ 1,8,

(C) d'un revêtement incolore ayant un indice de réfraction n > 1,8,

(D) d'un revêtement absorbant ayant un Indice de réfraction n > 1,8,

et, de façon optionnelle,

(E) d'une couche extérieure de protection.

2. Pigments d'interférence selon la revendication 1, **caractérisés en ce que** les substrats de forme lamellaire sont des micas naturels ou synthétiques, des lamelles de verre, d'$Al_2O_3$, de $SiO_2$ ou de $TiO_2$.

3. Pigments d'interférence selon la revendication 1 ou 2, **caractérisés en ce que** la couche (A) est constituée de pseudobrookite.

4. Pigments d'interférence selon l'une des revendications 1 à 3, **caractérisés en ce que** la couche (B) est essentiellement constituée d'un ou plusieurs oxydes métalliques.

5. Pigments d'interférence selon l'une des revendications 1 à 4, **caractérisés en ce que** la couche (B) est essentiellement constituée de dioxyde de silicium, d'oxyde d'aluminium, de fluorure de magnésium ou de leurs mélanges.

6. Pigments d'interférence selon l'une des revendications 1 à 5, **caractérisés en ce que** la couche (A) contient, comme autres oxydes métalliques, $Al_2O_3$, $Ce_2O_3$ et/ou $B_2O_3$.

7. Pigments d'interférence selon l'une des revendications 1 à 6, **caractérisés en ce qu'**ils présentent jusqu'à quatre fois la suite de couches (A) + (B) + (C) + (D).

8. Pigments d'interférence selon l'une des revendications 1 à 6, **caractérisés en ce qu'**ils ne présentent que la suite de couches (A) + (B) + (C) + (D).

9. Pigments d'interférence selon l'une des revendications 1 à 8, **caractérisés en ce qu'**ils contiennent entre les couches (C) et (D) une autre couche incolore, faiblement réfringente (B*) pouvant être identique à la couche (B) ou différente de celle-ci.

10. Pigments d'interférence selon l'une des revendications 1 à 9, **caractérisés en ce qu'**ils présentent une couche extérieure (E) de protection pour augmenter la stabilité à la lumière, aux changements de températures et la résistance aux intempéries.

11. Procédé pour la préparation des pigments d'interférence selon l'une des revendications 1 à 10, **caractérisé en ce que** le revêtement des substrats est effectué par voie chimique humide par décomposition hydrolytique de sels métalliques en milieu aqueux.

12. Utilisation des pigments d'interférence selon la revendication 1 dans les peintures, les vernis, les encres d'imprimerie, les encres d'imprimerie de sécurité, les matières plastiques, lcs matériaux céramiques, les verres et dans les formulations cosmétiques et pour la fabrication de préparations pigmentaires et de préparations sèches.

13. Préparations pigmentaires contenant un ou plusieurs liants, de façon optionnelle un ou plusieurs additifs et un ou plusieurs pigments d'interférence selon la revendication 1.

14. Préparations sèches telles que billes, granulés, lamelles, agglomérés contenant des pigments d'interférence à pouvoir colorant élevé selon la revendication 1.